# EUROPÄISCHE PATENTANMELDUNG

(11) **EP 1 864 855 A1**
(43) Veröffentlichungstag der Anmeldung: **12.12.2007**
(21) Anmeldenummer: 06115233.6
(22) Anmeldetag: 09.06.2006
(51) Int. Cl.: B60N 2/68, B60N 2/005, B60N 2/015, B60N 2/24, B61D 33/00

(54) **Sitzträger**

(71) Anmelder: SCHLEGEL AG, 9403 Goldach (CH)
(72) Erfinder: Moosbrugger, Roman, 9403, Goldach (CH)
(74) Vertreter: Stocker, Kurt

(57) **Zusammenfassung**

Ein Sitzträger (1) umfasst einen entlang einer Trägerachse ausladenden Tragbereich zum Tragen mindestens eines Sitzes und ein Verbindungsende (3) zum Montieren des Sitzträgers (1) an seitlichen Befestigungselementen eines Fahrgastraumes. Der Sitzträger (1) umfasst zudem zwei voneinander beabstandete Seitenflächen (4), die sich vom Verbindungsende (3) im Wesentlichen bis zum freien Ende (5) des Sitzträgers (1) erstrecken. Die Ausdehnung der Seitenflächen (4) normal zur Trägerachse nimmt vom Verbindungsende (3) aus gegen das freie Ende (5) des Sitzträgers (1) hin ab. Der Sitzträger(1) hält bei kleinem Eigengewicht sehr hohen dynamischen Belastungen Stand. Konstruktive Anpassungen entsprechend der Länge und Belastung eines Sitzträgers (1) sind mit kleinem Aufwand möglich. Der Freiraum unter den Sitzen ist sehr gross.

## Beschreibung

Die Erfindung bezieht sich auf Sitzträger nach dem Oberbegriff des An-spru-ches 1.

Zum Befestigen von Fahrgastsitzen in öffentlichen Verkehrsmitteln werden Sitzträger ver-wendet. Die Sitzträger werden auf der gewünschten Höhe im Fahrgastraum angeordnet. An den Sitzträgern sind Sitze befestigt.

Aus den Schriften EP 443 065 B1 und DE 197 36 107 A1 sind Sitzträger in der Form von Profilstäben mit einem geschlossenen Kasten und Befestigungsschienen bekannt. Die Pro-file sind annähernd rechteckig mit in Längsrichtung konstantem Querschnitt. Sie werden beispielsweise auf zwei Füssen montiert (EP 443 065 B1) oder auf der einen Seite an der Wand und auf der anderen Seite an einer Deckenaufhängung (DE 197 36 107 A1). Die Pro-filstäbe haben eine komplizierte Querschnittsform und sind daher in der Herstellung aufwän-dig.

Aus den Schriften W002/098701 A2 und EP 628 468 B1 sind Sitzträger bekannt, die an der Wand des Fahrgastraumes montiert werden. Dabei ist eine Seite eines horizontalen Trägers an einer oberen Befestigungsstelle befestigt. Um den ausladenden Träger zu stützen, ist am Träger etwas ausserhalb der Trägermitte eine Schrägverbindung angeordnet. Das freie Ende der Schrägverbindung wird an einer unteren Befestigungsstelle unterhalb der oberen Befestigungsstelle an einem Befestigungselement befestigt. Die Schrägverbindung ersetzt einen Fuss.

Gemäss der W002/098701 A2 wird die Schrägverbindung als separates Teil am Sitzträger montiert. Die Schrägverbindung umfasst aufwändige Anschlussstücke und führt zu einem grossen Montageaufwand.

Bei Lösungen gemäss der EP 628 468 B1 ist die Schrägverbindung bereits vor der Montage mit dem Sitzträger verbunden. In den dargestellten Ausführungsformen sind jeweils zwei Rohre in einem spitzen Winkel miteinander verbunden. Das dickere Rohr bildet den Sitzträ-ger und das dünnere die Schrägverbindung. Die Verbindung der Rohre wird stark belastet und bildet eine Schwachstelle.

Auf dem Markt ist auch ein Sitzträger, bei dem ein horizontales Trägerprofil mit konstantem Profilquerschnitt an einem von der Seite gesehen dreieckförmigen Verbindungsteil montiert wird. Der Verbindungsteil ist über vier Schrauben mit dem Trägerprofil und über vier Schrauben mit Befestigungselementen des Fahrgastraumes verbunden. Das Trägerprofil ist kompliziert gestaltet und somit aufwändig in der Herstellung als Strangpressprofil. Die Mon-tage umfasst das Befestigen des Verbindungsteils an den Befestigungselementen und zu-sätzlich das Befestigen des Trägerprofils am Verbindungsteil.

Die Aufgabe der vorliegenden Erfindung besteht nun darin, einen Sitzträger zu fin-den, der stabil, einfach aufgebaut und einfach zu montieren ist.

Diese Aufgabe wird durch die Merkmale des Anspruches 1 gelöst. Die abhängi-gen An-sprüche beschreiben alternative bzw. vorteilhafte Ausfüh-rungsformen.

Beim Lösen der Aufgabe wurde erkannt, dass bei der Konstruktion der bekannten Sitz-träger zwei Funktionen getrennt gelöst werden. Für das Tragen der Sitze ist ein hori-zontaler Träger vorgesehen, dessen Ausgestaltung nicht von der Art der Montage im Fahrgastraum abhängt. Die Montage wiederum ist nur für sich gelöst, mittels einer Ver-bindungsvorrichtung. Darum bestehen die Sitzträger gemäss dem Stande der Technik aus einem horizontalen Träger mit konstantem Querschnitt und einer Verbindungsvor-richtung zu einem Befestigungsbereich des Fahrgastraumes.

Im Rahmen der vorliegenden Erfindung wurde erkannt, dass der Träger entsprechend der gewünschten Montage integral als Sitzträger mit Verbindungseinrichtung ausgebildet sein soll. Wenn der Träger nur auf einer Seite gelagert bzw. an seitlichen Befestigungselemen-ten des Fahrgastraumes montiert wird, so muss die Form des gesamten Sitzträgers auf diese Montage ausgerichtet sein. Dabei muss eine optimale Übertragung der Kräfte von den besetzten Sitzen auf die Befestigungselemente des Fahrgastraumes mit einem einfachen Sitzträger gewährleistet sein.

Bei einseitig montierten Sitzträgern wird die gewünschte Belastbarkeit dann mit einem möglichst leicht gebauten Sitzträger erzielt, wenn die vertikale Ausdehnung des Sitzträ-gers von den Befestigungselementen aus über einen grossen Längsbereich, bzw. min-destens zwei Drittel der Länge, des Trägers abnimmt. Dadurch ist die Änderung der vertikalen Ausdehnung nicht nur auf einen Verbindungsteil beschränkt. Vorzugsweise ist die Änderung der vertikalen Ausdehnung des erfindungsgemässen Sitzträgers an seinem Verbindungsende grösser als in einem Bereich gegen sein freies Ende hin. Auf eine Verbindung mit Schrauben zwischen einem Verbindungsteil und einem horizonta-len Träger kann verzichtet werden, wenn sich der Sitzträger integral vom Verbindung-sende bis zum freien Ende erstreckt.

Um die abnehmende vertikale Ausdehnung vom Verbindungsende gegen das freie Ende hin mit einfachen Herstellungsschritten bereitstellen zu können, wird mindestens ein Teil des Sitzträgers aus einem Blech gestanzt oder geschnitten. Die Form des Blechteiles wird so gewählt, dass Sitzträger-Seitenflächen mit der gewünschten Änderung der vertikalen Aus-dehnung bereitgestellt werden können. Die Blechteile werden vorzugsweise durch Kan-ten bzw. Biegen weiter bearbeitet. Um mit kleinem Aufwand einen Sitzträger mit der benö-tigten Stabilität bereitstellen zu können, wird mindestens ein Blechteil mit mindestens einer Sitzträger-Seitenfläche mit einem einfachen Profilrohr verbunden, vorzugsweise mittels Schweissen. Das Profilrohr verläuft dabei entlang des oberen Randes des Sitzträgers und hat vorzugsweise einen rechteckigen Querschnitt. Am Verbindungsende werden Verbin-dungseinrichtungen, beispielsweise in der Form von vier Löchern bereitgestellt, um den Sitzträger an den Befestigungselementen des Fahrgastraumes zu befestigen.

Ein einfach aufgebauter Sitzträger mit hoher Stabilität umfasst zwei voneinander beabstan-dete Seitenflächen. Zum Bereitstellen der beiden Seitenflächen kann von einem Blechzu-schnitt ausgegangen werden. Mittels Kanten wird zwischen den Seitenflächen mindestens eine obere Verbindungsfläche ausgebildet. An dieser mindestens einen oberen Verbin-dungsfläche können Sitze montiert werden. Gegebenenfalls umfasst die obere Verbin-dungsfläche eine zentrale u-förmige Vertiefung entlang der Trägerachse. Wenn zwischen den beiden Seitenflächen ein Profilrohr angeordnet wird, so ist es zweckmässig für jede Seitenfläche einen eigenen Blechzuschnitt zu verwenden. Dieser Blechzuschnitt kann nebst der Seitenfläche noch eine Verbindungsfläche und einen Steg umfassen, wobei der Steg am Profilrohr fest geschweisst wird und die Verbindungsfläche sich vom Steg zur Seitenfläche erstreckt. Gegebenenfalls wird aber direkt die Seitenfläche am Profilrohr befestigt.

Die Seitenflächen oder Teile davon können im montierten Zustand etwas schief zur Vertika-len stehen. Wenn die Seitenflächen vom oberen Ende des Sitzträgers gegen unten etwas zusammen laufen, so kann die Formstabilität etwas erhöht und das Erscheinungsbild ver-bessert werden. Zur Erhöhung der Formstabilität könnten unterhalb des Profilrohres Stege zwischen den Seitenflächen angeordnet werden.

Das verwendete Profilrohr gewährleistet eine hohe Stabilität gegen Verdrehung. Die Seiten-flächen erzielen die gewünschte Kräfteübertragung von montierten Sitzen über den Sitzträ-ger auf die Befestigungselemente. Die Montage des gesamten Sitzträgers mit Verbin-dungsteil kann beispielsweise auf das Festschrauben von vier Schrauben beschränkt wer-den. Verschraubungen zwischen Teilen eines Sitzträgers sind nicht nötig. Das Gewicht und der Herstellungs- sowie Montageaufwand der erfinderischen Sitzträger ist deutlich kleiner als bei den bekannten Sitzträgern. Konstruktive Anpassungen entsprechend der Länge und Belastung eines Sitzträgers sind mit kleinem Aufwand möglich. Für solche Änderungen kön-nen ein Profilrohr mit entsprechendem Querschnitt und angepasste Seitenflächen gewählt werden. Die Gewichts- und Stabilitätsoptimierung für 1, 2 und 3 Sitzplätze ist ohne teure Formwerkzeuge möglich. Es können verschiedene Sitztypen montiert werden und der Frei-raum unter den Sitzen ist sehr gross.

Berechnungen haben gezeigt, dass die erfinderischen Sitzträger bei kleinem Eigengewicht sehr ho-hen dynamischen Belastungen (3g-Stoss, Norm EN 12663) Stand halten. Das Gewicht eines erfinderischen Sitzträgers beträgt für 2 Sitze 13kg und für 3 Sitze 17kg. Das Schwing-verhalten mit Eigenfrequenzen über 53Hz ist vorteilhaft.

Die Zeichnungen erläutern den erfindungsgemässen Sitzträger anhand eines Aus-füh-rungsbeispieles. Dabei zeigt
Fig. 1 eine perspektivische Darstellung eines Sitzträgers,
Fig. 2 eine rückseitige Ansicht des Sitzträgers,
Fig. 3 eine Seitenansicht des Sitzträgers,
Fig. 4 eine Draufsicht auf einen Blechzuschnitt mit einer Seitenfläche,
Fig. 5 eine Explosionsdarstellung eines der Teile des Sitzträgers, und
Fig. 6 eine perspektivische Darstellung des Sitzträgers mit schematisch dargestell-ten Schweissnähten

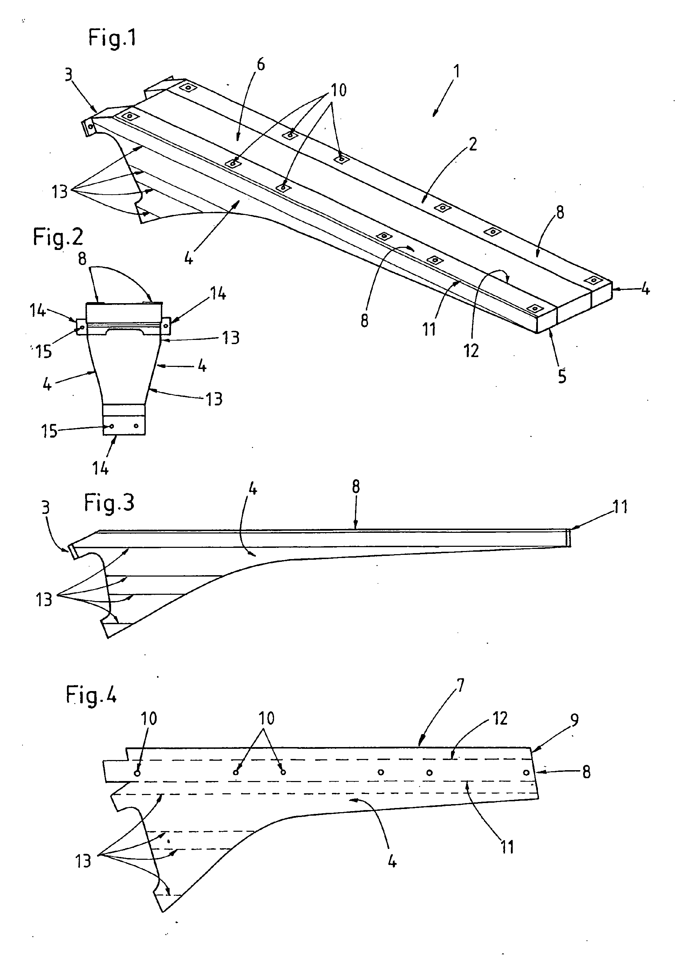

Fig. 1 bis 3 zeigen einen Sitzträger 1 mit einem entlang einer Trägerachse ausladenden Tragbereich 2 zum Tragen mindestens eines Sitzes und einem Verbindungsende 3 zum Montieren des Sitzträgers an seitlichen Befestigungselementen eines Fahrgastraumes. Der Sitzträger 1 umfasst zwei voneinander beabstandete Seitenflächen 4 umfasst, die sich vom Verbindungsende 3 im Wesentlichen bis zu einem freien Ende 5 des Sitzträgers erstre-cken. Die Ausdehnung der Seitenflächen 4 nimmt normal zur Trägerachse vom Verbin-dungsende 3 aus über mindestens zwei Drittel der Länge, gegebenenfalls aber bis zum freien Ende 5, des Sitzträgers 1 ab. In der dargestellten Ausführungsform nimmt die Ausdehnung der Seitenflächen normal zur Trägerachse vom Verbindungsende aus in einem ersten Drittel stärker ab als im restlichen Bereich.

Der Sitzträger 1 umfasst ein Profilrohr 6, vorzugsweise mit einem Rechteckprofil. Das Profilrohr 6 erstreckt sich vom freien Ende 5 des Sitzträgers 1 im Wesentlichen bis zum Verbindungsende 3 und ist mit den Seitenflächen 4 verbunden. Die vertikale Ausdeh-nung des Profilrohres 6 entspricht der Höhe der Seitenfläche 4 am freien Ende 5 des Sitzträgers 1.

Fig. 4 zeigt einen Zuschnitt 7 eines Bleches, wobei das Blech vorzugsweise eine Dicke im Bereich von 1.5 bis 3.5mm, insbesondere von 2 bis 2.7mm, aufweist. Der Zuschnitt 7 umfasst eine Seitenfläche 4, eine obere Verbindungsfläche 8 und einen Steg 9. Im Be-reich mit der oberen Verbindungsfläche 8 sind Bohrungen 10 zum Befestigen von Sitzen angebracht. Am Blechzuschnitt werden Kanten ausgebildet. Eine erste Kante 11 bildet den im Querschnitt rechtwinkligen Übergang von der Seitenfläche 4 zur oberen Verbindungsfläche 8 und eine zweite Kante den rechtwinkligen Übergang von der obe-ren Verbindungsfläche 8 zum Steg 9. Weitere Kanten 13 mit flachen Winkeln geben der Seitenfläche eine Form, die etwas von einer Ebene abweicht.

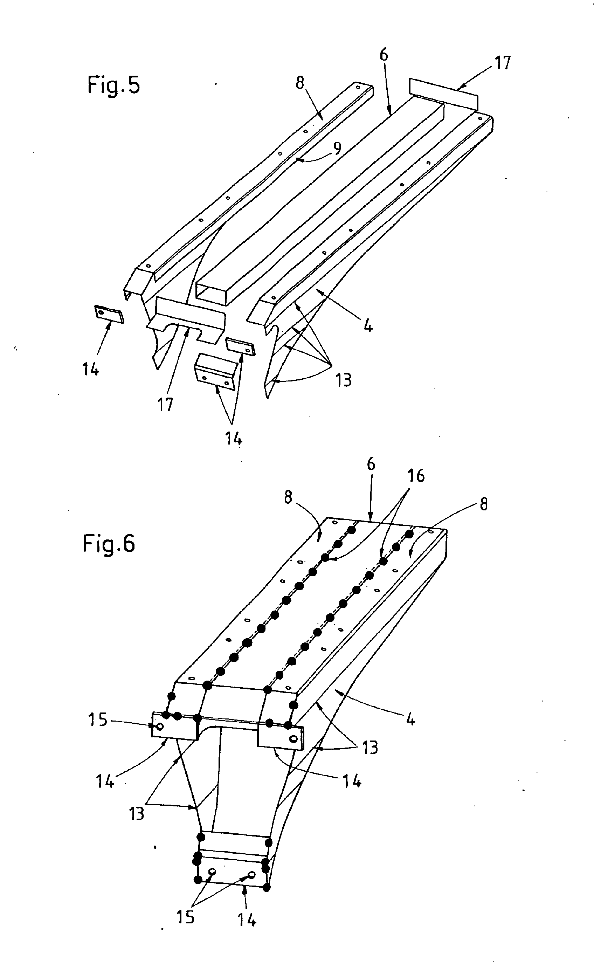

Fig. 5 und 6 zeigen das Verbinden von Teilen eines Sitzträgers 1 zum Sitzträger 1. Die Stege 9 werden an je eine Seite des rechteckigen Profilrohres 6 angelegt und über eine Schweissverbindung 16 bei der zweiten Kante 12 mit dem Profilrohr 6 verbunden. Die Verbindungsflächen 8 führen vom Profilrohr 6 weg zu den Seitenflächen 4. Die von den weiteren Kanten 13 gebildeten Teilflächen der Seitenflächen 4 stehen im montierten Zu-stand des Sitzträgers 1 etwas schief zur Vertikalen, wobei die Seitenflächen 4 beim Verbin-dungsende 3 von oben nach unten etwas zusammen laufen. Am Sitzträger 1, vorzugs-weise am Blech der Seitenfläche 4, sind beim Verbindungsende 3 Verbindungs-Blechteile 14 mit Löchern 15 fest geschweisst, um den Sitzträger 1 an Befestigungselementen des Fahrgastraumes zu montieren.

An den beiden Stirnseiten des Profilrohres 6 sind Abschlusselemente, vorzugsweise Ab-schluss-Blechteile 17, angeordnet. Gegebenenfalls sind die Verbindungs-Blechteile 14 mit den Abschlusselementen verbunden, oder die Löcher15 an den Abschlusselementen aus-gebildet.

## Patentansprüche

1. Sitzträger (1) mit einem entlang einer Trägerachse ausladenden Tragbereich zum Tra-gen mindestens eines Sitzes und einem Verbindungsende (3) zum Montieren des Sitz-trägers (1) an seitlichen Befestigungselementen eines Fahrgastraumes, da-durch gekennzeich-net, dass der Sitzträger (1) zwei voneinander beabstandete Seitenflä-chen (4) umfasst, die sich vom Verbindungsende (3) im Wesentlichen bis zum freien Ende (5) des Sitzträgers (1) erstrecken, wobei die Ausdehnung der Seitenflächen (4) normal zur Trägerachse vom Verbindungsende (3) aus gegen das freie Ende (5) des Sitzträgers (1) hin abnimmt.

2. Sitzträger (1) nach Anspruch 1, da-durch **gekennzeichnet**, dass die Ausdehnung der Seitenflächen (4) normal zur Trägerachse vom Verbindungsende (3) aus über min-destens zwei Drittel der Länge des Sitzträgers (1) abnimmt, wobei die Abnahme vorzugsweise in einem ersten Drittel grösser ist als im restlichen Bereich.

3. Sitzträger (1) nach Anspruch 1 oder 2, da-durch **gekennzeichnet**, dass die Ausdeh-nung der Seitenflächen (4) normal zur Trägerachse vom Verbindungsende (3) aus bis zum freien Ende (5) des Sitzträgers (1) abnimmt.

4. Sitzträger (1) nach einem der Ansprüche 1 bis 3, da-durch **gekennzeichnet**, dass der Sitzträger (1) ein Profilrohr (6) umfasst, vorzugsweise ein Rechteckprofilrohr, das sich vom freien Ende (5) im Wesentlichen bis zum Verbindungsende (3) erstreckt und mit den Seitenflächen (4) verbunden ist.

5. Sitzträger (1) nach einem der Ansprüche 1 bis 4, da-durch **gekennzeichnet**, dass die Seitenflächen (4) aus einem Blech hergestellt sind, wobei das Blech vorzugsweise eine Dicke im Bereich von 1.5 bis 3.5mm, insbesondere von 2 bis 2.7mm.

6. Sitzträger (1) nach Anspruch 5, da-durch **gekennzeichnet**, dass das Blech der Seitenflä-che (4) über eine erste Kante (11) in eine obere Verbindungsfläche (8) und die obere Verbindungsfläche (8) über eine zweite Kante (12) in einen Steg (9) über geht, wobei der Steg (9) an einer Seite des rechteckigen Profilrohres (6) anliegt und das Blech mit der Seitenfläche (4) über eine Schweissverbindung (16) bei der zweiten Kante (12) mit dem Profilrohr (6) verbunden ist.

7. Sitzträger (1) nach Anspruch 5 oder 6, da-durch **gekennzeichnet**, dass am Blech der Seitenfläche (4) beim Verbindungsende (3) Verbindungseinrichtungen, vorzugsweise Verbindungs-Blechteile (14) mit Löchern; fest geschweisst sind, um den Sitzträger (1) an Befestigungselementen des Fahrgastraumes zu montieren.

8. Sitzträger (1) nach einem der Ansprüche 1 bis 7, da-durch **gekennzeichnet**, dass Teilflächen der Seitenflächen (4) im montierten Zustand etwas schief zur Vertikalen stehen, wobei die Seitenflächen (4) beim Verbindungsende (3) von oben nach unten etwas zusammen laufen.

9. Sitzträger (1) nach Anspruch 4, da-durch **gekennzeichnet**, dass an den beiden Stirnsei-ten des Profilrohres (6) Abschlusselemente, vorzugsweise Anschluss-Blech-teile (17), angeordnet sind.
